# EUROPEAN PATENT APPLICATION

(11) **EP 1 848 205 A1**
(43) Date of publication of application: **24.10.2007**
(21) Application number: 07106564.3
(22) Date of filing: 20.04.2007
(51) Int. Cl.: H04N 5/445, H04N 5/45

(54) **Display system, video processing apparatus, and video processing method**

(30) Priority: 20.04.2006 JP 2006117280
(71) Applicant: MATSUSHITA ELECTRIC INDUSTRIAL CO., LTD, Kadoma-shi, Osaka 571-8501 (JP)
(72) Inventor: Kuwabara, Takashi, Osaka-shi Osaka 540-6319 (JP); Fukuda, Hisaya, Osaka-shi Osaka 540-6319 (JP); Konno, Shunsuke, Osaka-shi Osaka 540-6319 (JP); Umei, Toshitomo, Osaka-shi Osaka 540-6319 (JP); Katta, Noboru, Osaka-shi Osaka 540-6319 (JP); Nakagawa, Seiichi, Osaka-shi Osaka 540-6319 (JP)
(74) Representative: Grünecker, Kinkeldey, Stockmair & Schwanhäusser Anwaltssozietät

(57) **Abstract**

A wide display (200) displays video obtained from a content source on a screen (230) in single-screen display mode or in dual-screen display mode. A video processing apparatus (600) switches the mode of video display from dual-screen display mode to single-screen display mode when a plurality of same videos are displayed on split screens (210) and (220) formed by splitting the screen (230) of the wide display (200).

## Description

### BACKGROUND OF THE INVENTION

### Field of the Invention

The present invention relates to a display system, video processing apparatus, and video processing method.

### Description of the Related Art

As background art, there are systems enabling passengers to view television, video, or DVD on a vehicle-mounted display. Additionally, there are systems, generally known, making a landscape display show camera images synthesized in the horizontal direction (e.g., Japanese Patent Application Laid-Open No. 2001-114048).

A system, recently desired, allows any passenger to view content in accordance with his or her own preferences. The landscape display, according to background art, displays a video (e.g., a television program, movie, etc.) synthesized in the horizontal direction and enables any passenger to view different contents. However, just displaying the synthesized video enables no passenger to view content in accordance with his or her own preferences. That is, a simple combination of background art has certain limits at the standpoint of user-friendliness for all passengers.

### SUMMARY OF THE INVENTION

It is an object of the present invention to provide a display system, video processing apparatus, and video processing method capable of improving system user-friendliness for passengers.

In accordance with one aspect of the display system of the present invention, the above object of the invention is achieved by employing a configuration having: a video processing section getting a display apparatus to display a video on an unsplit screen upon the video being displayed on all split screens formed by splitting the unsplit screen.

Further, in accordance with one aspect of the display system of the present invention, the above object of the invention is achieved by employing a configuration having: a display section displaying video in one of single screen display mode and split screen display mode; and a video processing section switching the mode of video display from the split screen display mode to the single screen display mode when a plurality of same videos are displayed in the split screen display mode.

Further, in accordance with one aspect of the video processing apparatus of the present invention, the above obj ect of the invention is achieved by employing a configuration having: a video processing section making video displayed on a screen in one of single screen display mode and split screen display mode; and a switching section switching the mode of video display from the split screen display mode to the single screen display mode when a plurality of same videos are displayed in the split screen display mode.

Furthermore, in accordance with one aspect of the video processing method of the present invention, the above object of the invention is achieved by employing: a video processing step of displaying video on a screen in one of single screen display mode and split screen display mode; and a switching step of switching the mode of video display from the split screen display mode to the single screen display mode when a plurality of same videos are displayed on the screen in the split screen display mode.

### BRIEF DESCRIPTION OF THE DRAWINGS

FIG.1 illustrates a block diagram of an audio visual system according to the present invention.
FIG.2 illustrates a diagram of operation authority according to the present invention.
FIG.3 illustrates a diagram of selected video setting information according to the present invention.
FIG.4 illustrates a flowchart of the operation in display mode of the present invention.
FIG.5 illustrates a diagram of the input value of a control-target split screen specified in an operation command according to the present invention.
FIG.6 illustrates a diagram of the input value of selected video specified in an operation command according to the present invention.
FIG.7 illustrates a diagram of change in video display in accordance with display mode switching control according to the present invention.
FIG. 8 illustrates a flowchart of the operation of resolution change according to the present invention.
FIG.9 illustrates a flowchart of the operation of switching display mode from single-screen display to dual-screen display according to the present invention.
FIG.10 illustrates a diagram of the operation buttons of a remote control according to the present invention.

### DETAILED DESCRIPTION OF THE PREFERRED EMBODIMENT

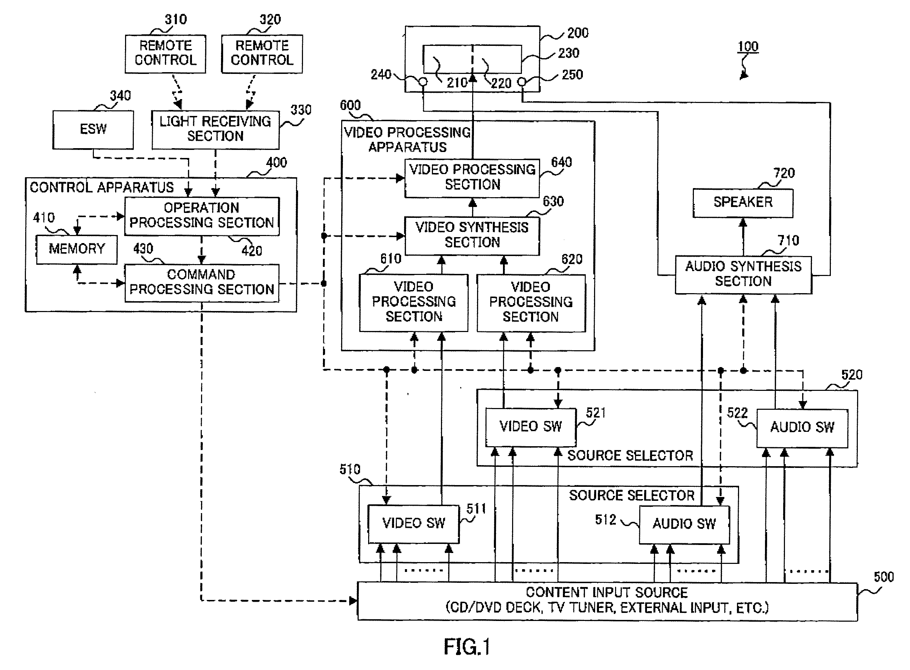

FIG.1 illustrates a block diagram of an audio visual (AV) system 100 according to the present invention. The AV system 100 is mounted on a vehicle. The AV system 100 includes a recording medium (not shown) for recording a program, a central processing unit (CPU: not shown) for executing the program, and a communication system (not shown) for receiving the program via radiocommunication.

In FIG.1, the AV system 100 has a wide display 200, remote controls 310 and 320, light receiving section 330, escutcheon switch (ESW) 340, control apparatus 400, content input source 500, source selectors 510 and 520, video processing apparatus 600, audio synthesis section 710 and speaker 720.

As a display apparatus, the wide display 200 has a screen 230 for displaying video. In one screenmode, the screen 230 displays video signals inputted from the video processing apparatus 600 in the whole area or in part of the screen 230 in single-screen display. In another screen mode, the screen 230 displays video signals from the video processing apparatus 600 on the screen 230 in dual-screen display. In dual-screen display, videos are displayed separately on the split screen 210 and the split screen 220, formed by splitting the entire area of the screen 230 vertically using, for example, a boundary section (the dashed line in figure) as a reference. Thus, the screen 230 has a landscape shape suitable for displaying side-by-side two videos provided from two video sources.

The term "video" used throughout the entire description of the present embodiment is a generic term for visual presentation (or representation) on the screen 230 of signals (video signals) generated, transmitted or processed using frames as the base unit. Further, although the screen 230 is split vertically to form the two split screens 210 and 220 in the present embodiment, that is, although dual-screen display is used as an example of split screen display in the present embodiment, the number and form of split screens are not limited to the above-described examples.

Further, the wide display 200 has headphone output terminals 240 and 250 as audio output devices. The headphone output terminals 240 and 250 are connectable to headphones (not shown), and output audio signals inputted from the audio synthesis section 710 to the headphones. The audio signals are outputted as audio from the headphones. Furthermore, the headphone output terminals 240 and 250 may be provided in other appropriate locations in the AV system 100 instead of on the body of the wide display 200 as shown in the figure.

The wide display 200 may be integrated in whole or in part with the control apparatus 400 or with the video processing apparatus 600 (later described in detail) to constitute a display apparatus or a display system.

The remote controls 310 and 320 are designed so that they are manually operable by passengers, generate operation commands in accordance with manual operations, convert the generated operation commands to radio signals such as infrared signals and transmit the signals by radio. The operation commands are used to control video display on the screen 230, including control of audio output from headphones connected to the headphone output terminals 240 and 250, and from the speaker 720. For example, the operation commands cover control-target video selection, control-target audio selection, source (CD/DVD deck, television (TV) tuner, externalinput, etc.) selection and TV channel selection. Further, the operation commands include commands used for setting information related to the operation of the ESW 340 and the remote controls 310 and 320 (e.g., the setting of operation authority). Furthermore, although the two remote controls 310 and 320 are used in the present embodiment, the number of remote controls and the manner of providing the remote controls inside the vehicle are not limited to the above-described examples.

The operation commands outputted from the remote controls 310 and 320 make it possible to individually control video display on the split screen 210, video display on the split screen 220, audio output from headphones connected to the headphone output terminal 240, audio output from headphones connected to the headphone output terminal 250, and audio output from the speaker 720. Further, this individual control can be executed in accordance with operation commands from different operation command input sources. The ESW 340 itself and the remote controls 310 and 320 themselves may be defined as operation command input sources, and the spatial positions of the remote controls 310 and 320 at the time of operation of the remote controls 310 and 320, or the spatial positions of passengers operating ESW340 and the remote controls 310 and 320 may be defined as operation command input sources.

The light receiving section 330 receives infrared signals transmitted from the remote controls 310 and 320, converts the signals to electronic signals that can be processed by the control apparatus 400, and outputs the converted signals to operation processing section 420 of the control apparatus 400.

The ESW 340 is installed in an appropriate location in the vehicle interior, such as on the frame of the wide display 200, for example. The ESW 340 is designed so that it is manually operable by a passenger, generates operation commands generated by manual operations as electronic signals, and outputs the electronic signals to operation processing section 420 of the control apparatus 400. The operation commands generated by the ESW 340 are the same as the commands generated by the remote controls 310 and 320.

As a video control apparatus or audio control apparatus, the control apparatus 400 has the memory 410, operation processing section 420 and the command processing section 430.

The memory 410 has various tables showing operation authority setting status and operation command definitions. Setting information of various tables held in the memory 410 is updated as needed by providing operation commands from the remote controls 310 and 320 and the ESW 340 or by detecting the seated state of passengers. The tables held in the memory 410 will be described later in detail.

The operation processing section 420 receives an operation command from the light receiving section 330 or the ESW 340. The operation processing section 420 outputs the operation command to the command processing section 430 when the received operation command is used to control video display or audio output. When the received operation command is used to set information related to the operation of the ESW 340 or the remote control 310 or 320, the operation processing section 420 reads or writes the setting information of various tables held in the memory 410. Upon receipt of the operation command, the operation processing section 420 works with the command processing section 430 as necessary so that the messages for subsequent manual operations are displayed as video or outputted as audio.

The operation section of the AV system 100 includes the operation processing section 420, remote controls 310 and 320, ESW 340 or light receiving section 330 or combinations of these.

As an identification means or control means, the command processing section 430 receives and analyzes the operation command from the operation processing section 420. More specifically, the command processing section 430 identifies the spatial position of the input source of the operation command, that is, the ESW 340 or remote controls 310 and 320, or the spatial position of the passenger operating the ESW 340 or remote controls 310 and 320. Furthermore, the command processing section 430 identifies the detail of control specified in the operation command and judges its validity.

Further, the command processing section 430 refers to and updates setting information related to the detail of control. Then, the command processing section 430 generates a command signal based on the analysis result and outputs the generated command signal to at least one of the video switches (SWs) 511 and 521 and the audio SWs 512 and 522 of the source selectors 510 and 520, the video processing sections 610, 620 and 640 and the video synthesis section 630 of the video processing apparatus 600 and the audio synthesis section 710, thereby achieving audio or video control. For example, to switch the source of the video displayed on the split screen 210, the command processing section 430 outputs a command signal to the source selector 510. Also, to switch the selected channel of the television tuner, the command processing section 430 outputs a command signal for switching, to the television tuner (television tuner 1 or television tuner 2 in the present embodiment) included in the content input source 500. The functions and operations of the command processing section 430 will be described later in detail.

The content input source 500 refers to a collection of content sources, such as a CD/DVD deck, television (TV) tuner and external input. Video signals from sources are outputted to the video SWs 511 and 521 and audio signals from sources are outputted to the audio SWs 512 and 522. While a CD/DVD deck, television (TV) tuner and external input have been illustrated as sources in the present embodiment, the content input source 500 may also include a hard disk drive (HDD) and AM/FM tuner, etc.

The source selector 510 has the video SW 511 and audio SW 512. The video SW 511 selectively outputs video signals inputted from the content input source 500 to the video processing section 610 of the video processing apparatus 600 in accordance with command signals inputted from the command processing section 430. The audio SW 512 selectively outputs audio signals inputted from the content input source 500 to the audio synthesis section 710 in accordance with command signals inputted from the command processing section 430.

The source selector 520 has the video SW 521 and audio SW 522. The video SW 521 selectively outputs video signals inputted from the content input source 500 to the video processing section 620 of the video processing apparatus 600 in accordance with command signals inputted from the command processing section 430. The audio SW 522 selectively outputs audio signals inputted from the content input source 500 to the audio synthesis section 710 in accordance with command signals inputted from the command processing section 430.

Here, the source selector 510, in the default settings for dual-screen display, forms one AV sub-system with the split screen 210, the headphone output terminal 240 and the video processing section 610. In this AV sub-system, video signals outputted from the video SW 511 are displayed as video on the split screen 210 via the video processing apparatus 600, and audio signals outputted from the audio SW 512 are outputted as audio from the headphones connected to the headphone output terminal 240 via the audio synthesis section 710. Note, however, that this does not apply when the default settings are changed.

Further, the source selector 520, in the default settings for dual-screen display, forms one AV sub-system with the split screen 220, the headphone output terminal 250 and the video processing section 620. In this AV sub-system, video signals outputted from the video SW 521 are displayed as video on the split screen 220 via the video processing apparatus 600 and audio signals outputted from the audio SW 522 are outputted as audio from the headphones connected to the headphone output terminal 250 via the audio synthesis section 710. Note, however, that this does not apply when the default settings are changed.

The video processing apparatus 600 has video processing sections 610, 620 and 640, and the video synthesis section 630.

The video processing section 610 performs predetermined video processing on the video signal from the video SW 511, and outputs the processed video signal to the video synthesis section 630. Further, the video processing section 620 performs predetermined video processing on the video from the video SW 521, and outputs the processed video to the video synthesis section 630. The video processing in the video processing sections 610 and 620 includes, for example, the adjustment of brightness, resolution, luminosity, saturation and hue. In this manner, the video processing sections 610 and 620 can perform different video processing for the video signals inputted from different source selectors 510 and 520 (video SWs 511 and 521). The video processing of the video processing section 610 and the video processing section 620 can be controlled by command signals inputted from the command processing section 430.

The video processing section 610 performs image quality adjustment such that the video display mode for the video displayed on either split screen from the video signal of the video processing section 610, and the video display mode for the video from the video signal of the video processing section 620, differ.

The video processing section 620 performs image quality adjustment such that the video display mode for the video displayed on either split screen from the video signal of the video processing section 620 and the video display mode for the video from the video signal of the video processing section 610 differ. This image quality adjustment is controlled in accordance with command signals from the command processing section 430. The image quality adjustment enables passengers--especially the passenger who operates the remote control 310 or 320 or the ESW 340--to identify which split screen of the two split screens 210 and 220 is targeted for control. The video synthesis section 630 synthesizes the video signal from the video processing section 620 with the video signal from the video processing section 620. This synthesis is executed when requested by a command signal inputted from the command processing section 430. Furthermore, the synthesized video signal is displayed on the screen 230 in dual-screen display mode (that is, in mode where the video signals are displayed separately on the respective split screens) . Further, the manner of synthesizing the video signals is controlled by command signals. When synthesis is not requested, the video synthesis section 630 outputs the video signal from the video processing section 610 or the video processing section 620, to the video processing section 640 in accordance with command signals.

Further, when a video signal inputted from the video processing section 610 and a video signal inputted from the video processing section 620 are displayed on the screen 230 in dual-screen display mode, if these video signals (in other words, the contents including the respective video signals) are the same, the video synthesis section 630 outputs only the video signal from one of the video processing sections, thereby switching the video display mode of the screen 230 from dual-screen display to single-screen display. Furthermore, detection of dual-screen display of the same video may be performed in the video processing apparatus 600 or the result of detection performed outside the video processing apparatus 600 may be reported to the video synthesis section 630 by command signals inputted from the command processing section 430.

Furthermore, the video synthesis section 630 detects whether or not the video signal to be outputted to the video processing section 640 is subjected to a 3-2 pull-down, when synthesis is not requested. If the video signal to be output is detected as 3-2 pull-down, the video synthesis section 630, converts the video signal in accordance with a command signal, so that the display mode of the video changes to wide, single-screen full display, and then outputs the converted video signal to the video processing section 640.

The video processing section 640 performs predetermined video processing on the video signal from the video synthesis section 630, outputs the video signal after the processing, and displays the video signal on the screen 230 in single-screen display mode or in dual-screen display mode. This video processing may be controlled by command signals inputted from the command processing section 430. The video processing in the video processing section 640 includes, for example, screen modification by inserting a black graphic in the video to be displayed on the screen 230. The black graphic insertion may be performed by inserting zero signals in the video signal to be processed. The black graphic insertion location may be, for example, the boundary part between the split screen210andthesplitscreen220. Inthiscase, the video displayed on the split screen 210 and the video displayed on the split screen 220 canbe clearly distinguished. As another example, the insertion location may be on the contour of the screen 230 or on the contour of each of the split screens 210 and 220. The width of the black graphic inserted at the boundary part or on the contour is adjustable . By adjusting the width of the black graphic, video of various resolutions and sizes can be displayed on the screen 230.

Even if the video processing section 640 is not provided, the video processing sections 610 and 620 can adjust image quality in accordance with command signals inputted from the command processing section 430. On the other hand, even if the video processing sections 610 and 620 are not provided, the video processing section 640 can adjust image quality in accordance with command signals inputted from the command processing section 430.

The audio synthesis section 710 outputs audio signals inputted from the audio SWs 512 and 522 to the headphone output terminals 240 and 250 and speaker 270. The audio signal outputted from the audio synthesis section 710 to the headphone output terminal 240 is the audio signal from the audio SW 512, the audio signal from the audio SW 522, or the audio signal obtained by synthesizing these audio signals. The audio signal outputted from the audio synthesis section 710 to the headphone output terminal 250 is the audio signal from the audio SW 512, the audio signal from the audio SW 522 or the audio signal obtained by synthesizing these audio signals. The audio signal outputted from the audio synthesis section 710 to the speaker 720 is the audio signal from the audio SW 512, the audio signal from the audio SW 522, or the audio signal obtained by synthesizing these audio signals. Which audio signal is outputted to which audio output device is controlled by command signals inputted from the command processing section 430. When audio signal synthesis is requested by a command signal, the ratio of synthesis is specified in the command signal.

As an audio output device, the speaker 720 outputs as audio the audio signal inputted from the audio synthesis section 710. The speaker 720 may be installed in any appropriate location in the vehicle interior.

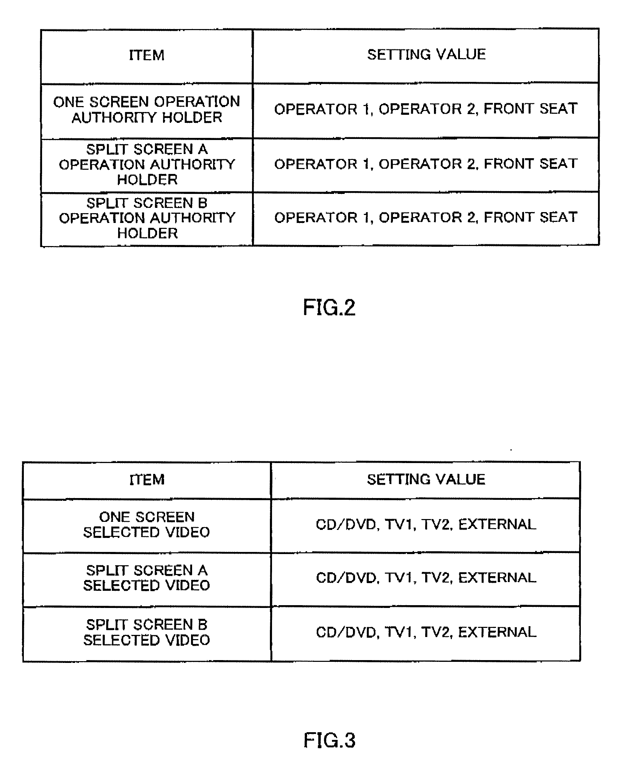

Next, the setting information of the various tables held in the memory 410 of the control apparatus 400 will be described. Here, setting information related to operation authority and setting information related to selected video will be described as examples with reference to FIG.2 and FIG.3, respectively.

In the operation authority setting information shown in FIG. 2, "one-screen operation authority holder" refers to a passenger who is granted authority to perform operations on one screen, "split screen "A" operation authority holder" refers to a passenger who is granted authority to perform operations on split screen "A", and "split screen "B" operation authority holder" refers to a passenger who is granted authority to perform operations on split screen "B". Furthermore, "one screen" is, for example, the screen 230, split screen "A" is, for example, the split screen 210, and split screen "B" is, for example, the split screen 220.

One screen operation authority is exclusively granted to operator 1 (e.g., the passenger who is seated in the left backseat and operates a remote control), operator 2 (e.g., the passenger who is seated in the right backseat and operates a remote control), or to the front seat (e.g., the passenger who is seated in the front passenger' s seat or the driver' s seat and operates a remote control or ESW). This setting can be changed as needed, and operation authority for one screen may be granted in plurality to operator 1, operator 2, or to some or all parties in the front seats. Further, after the mode of video display switches from dual-screen display to single-screen display, the operation authority may be automatically updated such that both the split screen "A" operation authority holder and the split screen "B" operation authority holder become one screen operation authority holders. Furthermore, it is preferable that both operator 1 and operator 2 have one screen operation authority.

Split screen "A" operation authority is exclusively granted to operator 1, operator 2, or to the front seat. This setting can be changed as needed, and split screen "A" operation authority may be granted in plurality to operator 1, operator 2, or to some or all parties in the front seats. Incidentally, it is preferable that operator 1 has split screen "A" operation authority.

Split screen "B" operation authority is exclusively granted to operator 1, operator 2, or to the front seat. This setting can be changed as needed, and split screen "B" operation authority may be granted in plurality to operator 1, operator 2, or to some or all parties in the front seats. Furthermore, it is preferable that operator 2 has split screen "B" operation authority.

In the present embodiment, for a deeper understanding of the present invention, "operator 1" is presumed to be a passenger who operates the remote control 310, "operator 2" is presumed to be a passenger who operates remote control 320, and "front seat" is presumed to refer to a passenger who operates the ESW 340. Thus, in the present embodiment, each of the operation authorities of one screen, split screen "A" and split screen "B" is granted to the remote control 310, remote control 320 or to the ESW 340. The remote controls 310 and 320 and the ESW 340 granted operation authorities, are recorded in a table as setting values.

Then, during the control of the video display on one screen, the video display on split screen "A", or the video display on split screen "B", only the operation commands from a plurality of command input sources (e.g., the remote controls 310 and 320 and the ESW 340) to which authority is granted, are judged to be valid in the command processing section 430. On the other hand, operation commands obtained from command input sources to which authority is not granted, are judged to be invalid in the command processing section 430.

Further, in the selected video setting information shown in FIG.3, "one screen selected video" refers to the video source displayed on one screen. "Split screen "A" selected video" refers to the video source displayed on split screen "A". "Split screen "B" selected video" refers to the video source displayed on split screen "B".

In the present embodiment, the video source can be selected from a CD/DVD deck, TV tuner 1 (TV1), TV tuner 2 (TV2), and external input. The selected source is recorded as a setting value in a table. Furthermore, naturally, the sources that can be recorded in the table as setting values and the sources that can be specified in operation commands as input values can be changed in accordance with the sources included in the content input source 500.

Furthermore, the various tables and setting information described above are merely examples and may be changed and implemented in a variety of ways.

Next, the operation of the AV system 100 having the above-mentioned configuration will be described.

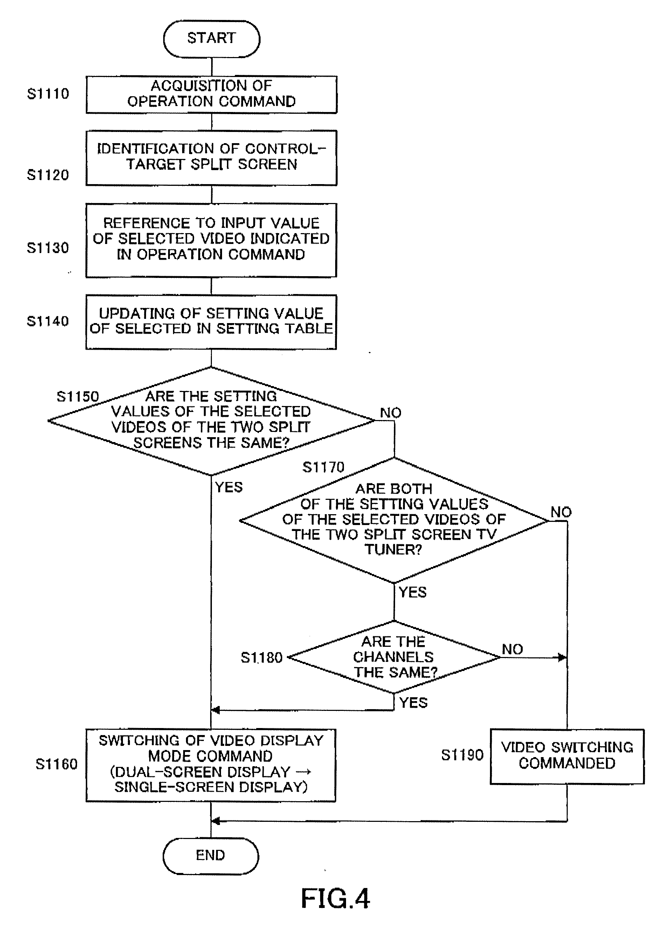

FIG.4 is a flowchart for explaining an example of the operation of the command processing section 430 upon switching the video display mode from dual-screen display to single-screen display. Here, split screens A and B are presumed to be the split screens 210 and 220, respectively, and the description will be given using as an example a case where, when videos from different content sources are displayed on the split screen 210 and split screen 220, respectively, the content source of the video displayed on the split screen 220 is switched from CD/DVD deck to TV tuner 1 (TV1) in accordance with an operation command from a remote control operation.

First, in step S1110, the operation command is provided from the operation processing section 420.

Then, in step S1120, the operation command is identified. More particularly, the control-target split screen specified in the operation command is identified.

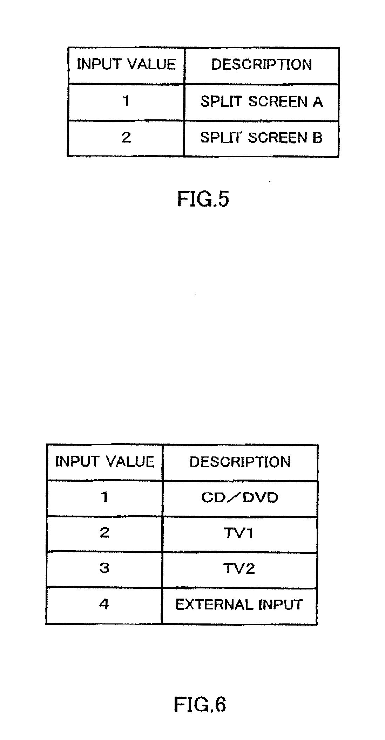

More specifically, when the input value of the control-target split screen is specified in the operation command (e.g., when the control-target split screen can be specified by manual operation by a passenger), the control-target split screen can be identified by referring to this input value. For example, when a passenger specifies the split screen 220, the input value "2" is displayed, for example, as shown in FIG.5, in the corresponding field of the operation command.

Furthermore, the method of identifying the control-target split screen is not limited to the above-described method, and various other methods are possible. For example, as understood from the description of the setting information shown in FIG.2, the operation authority for the split screen 220 may be granted in advance to a remote control. Thus, when a remote control identifier is in an obtained operation command, the control-target split screen can be identified by referring to that remote control identifier and referring to the operation authority setting information.

Then, in step S1130, reference is made to the input value of the selected video specified in the operation command. The input value of the selected video is defined as follows, for example. Given that the passenger selects, for example, TV1 as the content source after the switch, the input value "2" is displayed in the corresponding field in the operation command.

Then, in step S1140, the setting value of the selected video in the setting table is updated based on the input value of the selected video. In this example, in the table shown in FIG.3, the setting value of the selected video for the split screen "B" refers to CD/DVD. Thus, when the input value of the selected video is "2," that is, when TV1 is selected, for example, the setting value is updated by overwriting the setting value of the selected video for the split screen "B" from CD/DVD to TV1.

Then, in step S1150, a judgment is made as to whether or not the setting values for the two split screens 210 and 220 are the same. When the two setting values are the same (S1150: YES), the flow proceeds to step S1160. In this example, if the content source of the video displayed on the split screen 210 is TV1, the flow proceeds to step S1160. On the other hand, when the two setting values are different (S1150: NO), the flow proceeds to step S1170. In this example, if the content source of the video displayed on the split screen 210 is TV2 or external input, the flow proceeds to step S1170.

In step S1160, a signal providing a command for video display mode switching is outputted to the video synthesis section 630. At the same time, in accordance with the updated setting value of the selected video, a signal providing a switching command is outputted to the video SW supplying video signals displayed as video on the control-target split screen. In this example, given that the video signals displayed as videos on the split screen 210 and on the split screen 220 are respectively processed by the video SW 511 and the video SW 521, the video switch command signal is outputted to the video SW 521.

By the output of this video switch command signal, the video SW 521 switches the source of the video signal supplied to the video processing section 620 from CD/DVD deck to TV1 . The video processing section 620 continues outputting the video signal supplied from the video SW 521 to the video synthesis section 630. Further, by the output of this display mode switch command signal, the video synthesis section 630 stops synthesizing the video signal inputted from the video processing section 610 and the video signal inputted from the video processing section 620, and outputs one of these video signals to the video processing section 640. As a result, the video processing section 640 outputs only one video signal to the wide display 200 and have signal displayed on the screen 230. In this manner, the video display mode on the screen 230 is switched from dual-screen display to single-screen display.

Here, various methods can be used to determine which of the video signals inputted from the video processing sections 610 and 620 is to be outputted from the video synthesis section 630 to the video processing section 640. For example, possiblemethods include a method of outputting a command signal specifying the video signal to be output from the command processing section 430 to the video synthesis section 630, and a method of automatically selecting the video signal inputted from the video processing section corresponding to the video SW that was not commanded to switch the content source, to the video synthesis section 630.

Then, in step S1170, a judgment is made as to whether or not the setting values for two split screens 210 and 220 both specify a TV tuner. When both setting values specify a TV tuner (S1170: YES), the flow proceeds to step S1180. In this example, if the content source of the video displayed on the split screen 210 is TV2, the flow proceeds to step S1180. On the other hand, when at least one setting value is not TV tuner (S1170: NO), the flow proceeds to step S1190. In this example, if the content source of the video displayed on the split screen 210 is external input, the flowproceeds to step S1190.

In step S1180, a judgment is made as to whether or not the TV1 and TV2 channels are the same. When the currently selected channels for TV1 and TV2 are the same (S1180: YES), the flowproceeds to the above-mentioned step S1160. On the other hand, when the currently selected channels for TV1 and TV2 are different (S1180: NO), the flow proceeds to step S1190.

In step S1190, in accordance with the updated setting value of the selected video, a signal providing a command for video switching is outputted to the video SW that supplies the video signal displayed as video from the control-target split screen. In this example, given that the video signals respectively displayed as videos on the split screen 210 and the split screen 220 are processed by the video SW 511 and the video SW 521, respectively, the video switch command signal is outputted to the video SW 521.

By the output of this video switch command signal, the video SW 521 switches the source of the video signal supplied to the video processing section 620 from CD/DVD deck to external input. The video processing section 620 continues outputting the video signal supplied from the video SW 521 to the video synthesis section 630, the video synthesis section 630 synthesizes the video signals respectively inputted from the video processing sections 610 and 620 and outputs the synthesized signal to the video processing section 640, and the video processing section 640 displays the video signal synthesized by the video synthesis section 630 on the screen 230 in the continued dual-screen display mode. In this manner, the mode of video display on the screen 230 is kept dual-screen display as is, and only the video displayed on one of the split screens is switched.

Here, steps S1170 and S1180 of the above-described flow are preferably executed when the content input source 500 includes two or more television tuners. When two or more television tuners are provided, there is a possibility that the same channel will be selected even if different television tuners are selected. Selecting the same channel on different television tuners and selecting the same television tuner are the same thing when judged based on the videos displayed as a result on the screen 230. If, for example, the same channel is selected even though different television tuners are selected, the video displaymode automatically switches to single-screen display by executing the above-described steps S1170 and S1180, thereby reducing passenger operation time and further improving system user-friendliness.

Furthermore, the judgment in the above step S1180 does not necessarily need to be executed as part of the flow at the time of content source switching as shown in FIG.4 but may be executed independently. That is, when videos from TV tuners 1 and 2 are respectively displayed on the two the split screens 210 and 220, if the content input source 500 is commanded by the command processing section 430 to switch the channel of one of the TV tuners in accordance with an operation command from a remote control operation by a passenger, for example, the operation of the above-described step S1180 may be applied.

Further, when the above-described video switching control is carried out with switching control for the corresponding audio, the passenger operation time can be further reduced. On the other hand, when video switching control and audio switching control are not carried out together, video and audio from different content sources may be provided in various combinations, thereby further improving the entertainment value of the system.

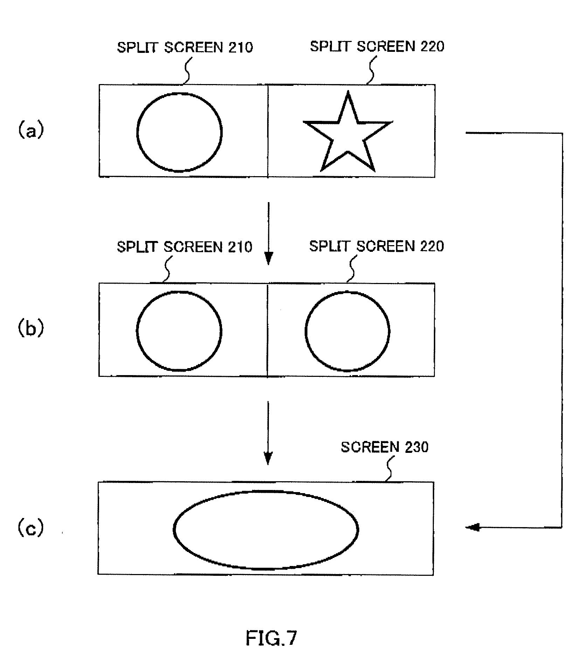

According to the flow described with reference to FIG. 4, the display mode switch signal and the video switch command signal are outputted at the same time, so that it is possible to switch from dual-screen display to single-screen display without displaying two videos after the content source switch, that is, without displaying the same video on the two split screens 210 and 220 (see the arrow on the right side in FIG. 7) . That is, switching the display mode in two stages such as following the states of (a), (b) and (c) shown in FIG.7 can be avoided, thereby making it possible to prevent viewer discomfort caused by frequent display switching.

Furthermore, the switching method of the video display mode from dual-screen display to single-screen display is not limited to the above-described example.

For example, when a section for detecting that the videos actually displayed on the two the split screens 210 and 220 match is provided in the video processing apparatus 600 or in the wide display 200, the video display mode can be switched from dual-screen display to single-screen display without generating or outputting a display mode switch command signal at the command processing section 430. That is, when a display mode switch command signal is not inputted to the video synthesis section 630, the video synthesis section 630 continues synthesizing the video signals inputted from the video processing sections 610 and 620, even if the same video signals are inputted. Thus, after different videos are displayed on the split screens on the screen 230, the same video is displayed on the split screens. This is shown by the change from (a) to (b) in FIG.7. At this time, the above-described match detection section detects split-screen display of the same video on the screen 230. Then, when the split screen display of the same video is maintained over a certain period of time, for example, the match detection section outputs a display mode switch command signal to the video synthesis section 630. The subsequent operation is as described above. As a result, the video displaymode is switched from dual-screen display to single-screen display [FIG.7(c)].

Further, regardless of the video displaymode switchingmethod, in video display switching control, the video synthesis section 630 stops video synthesis and at the same time, preferably, performs processing for displaying video bigger such that video is displayed over the entire area or in part of the screen 230 (wide single-screen full display). In this case, the command processing section 430 may output a signal providing a display mode switching command to the video processing section 640. Furthermore, at the same time with the process of displaying video bigger, the video processing section 640 preferably performs processing of moving the center part in the width direction of the displayed video to the center part in the width direction of the screen 230. Furthermore, at the same time, the video processing section 640 preferably inserts a black graphic in an appropriate manner in the remaining part of the screen 230 where video is no longer displayed.

When the video display mode is switched from dual-screen display to single-screen display, the resolution is changed for the video signal that is to be displayed as video in single-screen display mode.

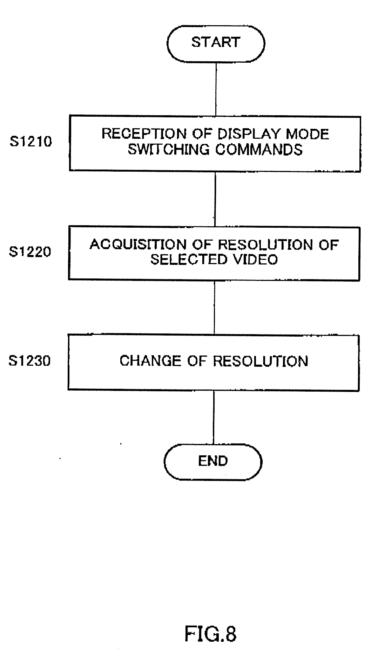

Referring to FIG. 8, first, in step S1210, a displaymode switch command signal is transmitted from the command processing section 430 and received by the video processing section 640. Then, in step S1120, the video processing section 640 obtains the resolution of the selected video by reading the resolution of the video to be changed. Next, in step S1230, the video processing section 640 changes the resolution of the video based on the setting information of the display mode after the switch to single-screen display. This resolution change minimizes image quality deterioration caused by the switch from dual-screen display to single-screen display.

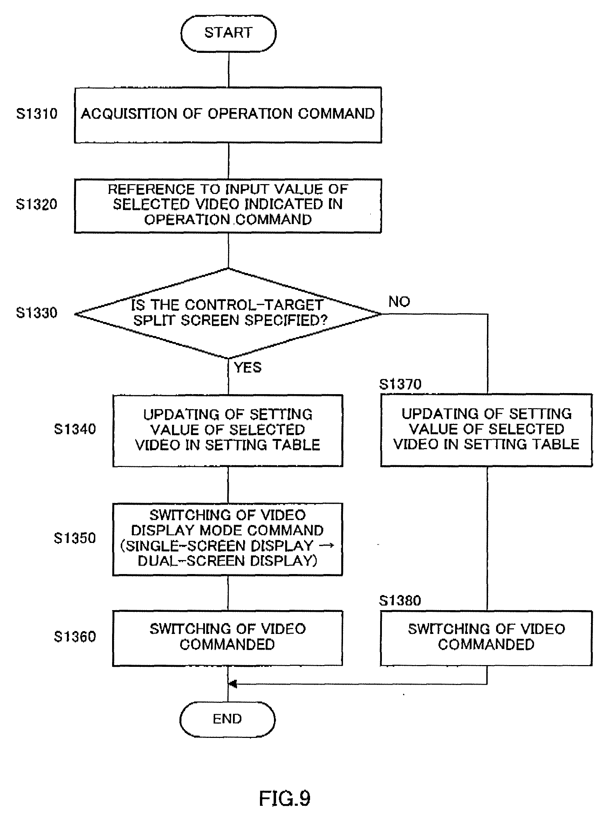

Next, an example of the operation of the command processing section 430 when the video display mode is switched from single-screen display to dual-screen display will be described with reference to the flowchart shown in FIG.9.

First, in step S1310, an operation command is provided from the operation processing section 420.

Then, in step S1320, reference is made to the input value of the selected video specified in the operation command. The input value of the selected video is defined in the setting table shown in FIG.6, for example.

Then, in step S1330, a judgment is made as to whether or not the control-target split screen is specified. When the control-target split screen is specified (S1330: YES), the flow proceeds to step S1340. On the other hand, when the control-target split screen is not specified (S1330: NO), the flow proceeds to step S1370. Whether or not the control-target split screen is specified can be checked by referring to the input value (illustrated in FIG.5) of the control-target split screen specified in the operation command. When the input value of the control-target split screen is not provided in the operation command, the judgment is made that no specification is provided.

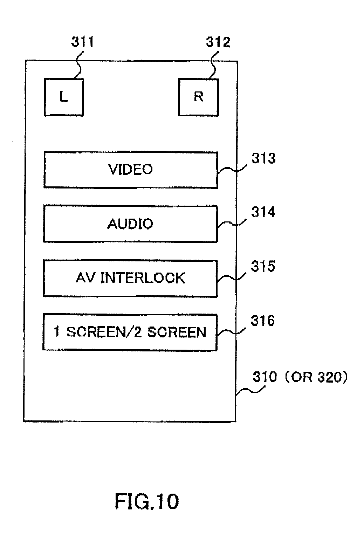

The input value of the control-target split screen can be generated by remote control operation by a passenger, for example. When the passenger wants to specify the left split screen, for example, the passenger presses the "L" operation button 311 on the remote control 310 (or the remote control 320) shown in FIG.10. Given that the left split screen is split screen "A", the input value "1" is generated by this operation. When the passenger wants to specify the right split screen, for example, the passenger presses the "R" operation button 312 on the remote control 310 (or the remote control 320) . Given that the right split screen is the split screen "B", the input value "2" is generated by this operation.

In step S1340, the setting values for selected video in the setting table are updated. For example, when the control-target split screen is split screen "A", the setting value is updated by overwriting the setting value for "split screen "A" selected video" shown in FIG. 3 with the input value of the selected video specified in the operation command. Further, for example, when the control-target split screen is split screen "B", the setting value is updated by overwriting the setting value for "split screen "B" selected video" shown in FIG. 3 with the input value of the selected video specified in the operation command.

Then, in step S1350, a signal providing a command for video display mode switching is outputted to the video synthesis section 630. By the output of this display mode switch command signal, the video synthesis section 630 starts synthesizing the video signal inputted from the video processing section 610 and the video signal inputted from the video processing section 620, and outputs the synthesized video signal to the video processing section 640.

Next, in step S1360, in accordance with the updated setting value of the selected video, a signal providing a command for video switching is outputted to the video SW supplying the video signal to be displayed as video from the control-target split screen. For example, the video switch command signal is outputted to the video SW 521 when the video displayed on the one screen is the video provided via the video SW 511, and the video switch command signal is outputted to the video SW 511 when the video displayed on the one screen is the video provided via the video SW 521.

Based on this video switch command signal, the video SW receiving the video switch command signal switches the source of the video signal supplied to the corresponding video processing section. In this manner, the video display on the screen 230 is switched from single-screen display mode to dual-screen display mode. Furthermore, preferably, the timing of the above-described steps S1350 and 1360 is controlled so that the steps are executed virtually simultaneously.

In step S1370, the setting value for selected video in the setting table are updated. In this case, the setting value is updated by overwriting the setting value of "one screen selected video" shown in FIG.3 with the input value of the selected video specified in the operation command.

Then, in step S1380, in accordance with the updated setting value of the selected video, a signal providing a command for video switching is outputted to the video SW supplying the video signal displayed as video from the screen subject to control (in this case, the unsplit, full screen) to the video processing section 610 or the video processing section 620.

Based on this video switch command signal, the video SW receiving the video switch command signal switches the source of the video signal supplied to the corresponding video processing section. In this manner, the display mode on the screen 230 is kept single-screen display as is, and the video displayed on the screen 230 is switched.

Further, when the above-described video switching control is carried out with switching control of the corresponding audio, the passenger operation time can be further reduced. On the other hand, when video switching control and audio switching control are not carried out together, video and audio from different content sources may be provided in various combinations, thereby further improving the entertainment value of the system.

Further, there are various examples of remote control operation methods for display mode switching control. For example, display mode switching control from single-screen display to dual-screen display can be achieved when a passenger presses the "L" or "R" operation button 311 or 312 on the remote control 310 (or remote control 320) shown in FIG.10 and then uses the "VIDEO" operation button 313 to specify the selected video. On the other hand, single-screen display mode is maintained if a passenger uses the "VIDEO" operation button 313 and specifies the selected video without pressing the "L" or "R" operation button 311 and 312. Furthermore, without using the "VIDEO" operation button 313, the same display mode switching control can be achieved when a passenger uses the "AUDIO" operation button 314 and specifies the selected audio and then presses the "AV INTERLOCK" operation button 315. On the other hand, display mode switching can also be achieved by manual operation of pressing the "1 SCREEN / 2 SCREENS" operation button 316.

As described above, according to the present embodiment, videos of different content sources can be simultaneously displayed on different split screens. As a result, the videos preferred by individual passengers can be displayed on a single screen, the user-friendliness of the system can be improved for individual passengers, and a single passenger can enjoy a plurality of contents at the same time. Particularly, according to the present embodiment, it is possible to individually control a plurality of videos displayed in split-screen display mode, thereby allowing the passengers to freely select videos to watch and as a result increasing the entertainment value of the system.

Furthermore, according to the present embodiment, when the videos displayed on the two split screens are the same, the video display mode is switched from dual-screen display to single-screen display, making the displayed video easier to view. Particularly, when the video display mode is switched to single-screen display and at the same time the video is displayed bigger, the displayed video becomes more exciting, allowing the passengers to enjoy the video more.

This concludes the description of the embodiment of the present invention. The above descriptions are illustrations of a preferred embodiment of the present invention, but the scope of the invention is not limited to the herein-described examples. For example, although a case has been described with the above embodiment where an AV system is used as a vehicle-mounted electronic device, the AV system of the present embodiment can also be used as a single unit and can be applied to an audio system or video system t installed in a confined space and requires user operation. Further, the configuration shown in FIG.1 is merely an example, and clearly in the scope of the present invention this configuration example may be changed or modified in a variety of ways.

Further, as another embodiment of the present invention, the present invention may be implemented by storing a program for realizing the functions of the components of the AV system described in the above embodiment in a readable recording medium and executing that program using a CPU.

The display system, video processing apparatus, and video processing method of the present invention are effective as vehicle-mounted devices such as AV systems and may be applicable for use in applications outside the vehicle, such as video equipment or audio equipment having a display apparatus or audio output device and requiring operations by a user in a confined space.

## Claims

1. A display system comprising:
a display section (200) displaying video in one of single screen display mode and split screen display mode; and
a video processing section (600) switching the mode of video display from the split screen display mode to the single screen display mode when a plurality of same videos are displayed in the split screen display mode.

2. A display system according to claim 1, further comprising a control section (400) providing a command for switching a content source of video,
wherein the video processing section (600) switches the mode of video display when the command for switching the content source of video displayed on one split screen to a same content source as video displayed on an other split screen is received while videos from different content sources are displayed in the split screen display mode.

3. A display system according to claim 2, wherein the video processing section (600) synthesizes the videos from different content sources and makes the display section (200) display synthesized video in the split screen display mode, and stops synthesizing the videos from different content sources and displays one of the video displayed on the one split screen and the video displayed on the other split screen bigger when the control section (400) provides the command for switching the content source of video.

4. A display system according to claim 2, wherein:
the different content sources include a first television tuner and a second television tuner capable of switching channels, and a video source different from the television tuners; and
the video processing section (600) switches the mode of video display when a command for switching the content source of the video displayed on the one split screen from the video source to the second television tuner is received from the control section (400) and a selected channel of the first television tuner and a selected channel of the second television tuner are the same while the one split screen and the other split screen display the videos from the video source and the first television tuner respectively.

5. A display system according to claim 1, wherein:
the display section (200) displays video of a selected channel of a television tuner;
The display system further comprises a control section (400) providing a command for switching the selected channel; and
the video processing section (600) switches the mode of video display when the command for switching the selected channel of video displayed on one split screen to a same selected channel as video displayed on an other split screen is received from the control section while videos of different selected channels are displayed in the split-screen display mode.

6. A display system according to claim 5, wherein the video processing section (600) synthesizes the videos of different selected channels and makes the display section (200) display synthesized video in the split screen display mode, and stops synthesizing the videos of different selected channels and displays one of the video displayed on the one split screen and the video displayed on the other split screen bigger when the control section (400) provides the command for switching the selected channel.

7. A video processing apparatus comprising:
a video processing section (640) making video displayed on a screen in one of single screen displaymode and split screen display mode; and
a switching section (630) switching the mode of video display from the split screen display mode to the single screen display mode when a plurality of same videos are displayed in the split screen display mode.

8. A video processing method comprising:
a video processing step of displaying video on a screen in one of single screen display mode and split screen display mode; and
a switching step of switching the mode of video display from the split screen display mode to the single screen display mode when a plurality of same videos are displayed on the screen in the split screen display mode.

9. A video processing apparatus comprises:
a video processing section (640) getting a display apparatus (200) to display a video on an unsplit screen upon the video being displayed on all split screens formed by splitting the unsplit screen.

10. A video processing apparatus according to claim 9, wherein the video processing section (640) gets the display apparatus to display the video on the unsplit screen if user operation for displaying the video on all the split screens is received while videos on each of the split screens is different.

11. A video processing apparatus according to claim 9, wherein the video processing section (640) makes the video on the unsplit screen lager than the video on the split screens.

12. A video processing apparatus according to claim 9, wherein the video processing section (640) determines whether the videos are on all the split screen on the basis of a state of a source selector.

13. A display system comprising:
a display unit (200); and
a video processing apparatus (600) getting the display apparatus (200) to display a video on an unsplit screen upon the video being displayed on all split screens formed by splitting the unsplit screen.
